# EUROPÄISCHE PATENTANMELDUNG

(11) **EP 2 015 039 A2**
(43) Veröffentlichungstag der Anmeldung: **14.01.2009**
(21) Anmeldenummer: 08159150.5
(22) Anmeldetag: 27.06.2008
(51) Int. Cl.: G01K 1/10, G01K 1/16

(54) **Schutzhülle für ein Temperaturmesselement**

(30) Priorität: 13.07.2007 DE 102007032694
(71) Anmelder: Kutzner, Dieter, 40699 Erkrath-Unterfeldhaus (DE)
(72) Erfinder: Kutzner, Dieter, 40699 Erkrath-Unterfeldhaus (DE)
(74) Vertreter: Gille Hrabal Struck Neidlein Prop Roos

(57) **Zusammenfassung**

Offenbart wird eine Schutzhülle für ein Temperaturmesselement mit einem geschlossenen Ende und einem offenen Ende, durch das ein Temperaturmesselement in eine im Inneren der Schutzhülle vorgesehene Ausnehmung eingeführt werden kann, **dadurch gekennzeichnet, dass** die Schutzhülle oxidkeramischen Faserverbundwerkstoff aufweist. Das geschlossene untere Ende der Schutzhülle weist ein anderes Material mit einer Wärmeleitfähigkeit von mindestens 20 W/mK auf.

## Beschreibung

Die Erfindung betrifft eine Schutzhülle für ein Temperaturmesselement, die insbesondere für die Temperaturkontrolle von Metallschmelzen und dabei bevorzugt von Aluminiumschmelzen verwendet werden kann.

### Stand der Technik

In verschiedenen gewerblichen Bereichen, wie der Metallurgie, ist die Messung der Temperatur von Flüssigkeiten bei hohen Temperaturen erforderlich. Beispielsweise ist bei der Herstellung von Aluminium notwendig, die Temperatur geschmolzenen Aluminiums im Ofen bei etwa 700 - 800 °C zu kontrollieren.

In Aluminiumschmelzen wird die Badtemperatur bevorzugt 720 bis 750 °C kontrolliert. Je höher die Temperatur ist, desto mehr Wasserstoff bildet sich in der Atmosphäre oberhalb der Metallschmelze aus der Umgebungsluft, desto spröder wird das Aluminium. Es wird dann eine kostenintensive Nachbehandlung mit Chlor und Argon notwendig.

Das Schmelzen von Aluminium erfolgt normalerweise chargenweise, wobei das Schmelzen jeder Charge etwa 3 bis 5 Stunden in Anspruch nimmt.

Die Messung der Temperatur wird durchgeführt, indem entweder durch die Seitenwand des Ofens oder vom oberen Ende des Ofens her ein Temperaturmesselement, im allgemeinen ein Thermoelement, in das geschmolzene Metall eingeführt wird. Die üblicherweise bei diesen Anwendungen verwendeten Thermoelemente sind im allgemeinen metallische thermoelektrische Elemente.

Die üblicherweise verwendeten Temperaturfühler sind Bimetall-Thermoelemente, beispielsweise aus Nickel-Chrom-Nickel, Ihre Länge beträgt bis zu 2,30 m.

Diese Elemente werden üblicherweise durch eine Schutzhülle geschützt. Verschiedenen Materialien sind für derartige Schutzhüllen bekannt.

Üblicherweise sind solche Temperaturfühler in Schutzrohren angeordnet, die entweder von Hand oder mit Hilfe einer hydraulischen mechanischen Vorrichtung in den Schmelzofen entweder von der Seite oder von oben eingeführt werden.

Die bekannten Schutzhülle bestehen aus Metall, z. B. aus dickwandigem Grauguss, Dieses Metall wird durch die Aluminiumschmelze sehr schnell angegriffen und hält maximal 2 Wochen, Problematisch ist, dass das in die Schmelze gelangte Metall deren Qualität verschlechtert.

Weiter sind Schutzhüllen aus keramischen Werkstoffen bekannt, deren Kosten aber ca. 5 bis 12mal so hoch liegen wie die von metallischen Schutzhülle. Ein Problem bei keramischen Schutzhüllen besteht insbesondere in deren Brüchigkeit. Problematisch bei den keramischen Schutzhüllen ist auch, dass diese nicht einfach nur durch eine Öffnung in den Ofen eingesteckt werden können, da dann die Dichtigkeit der Verbindung nicht ausreicht. Wenn die Schutzhülle jedoch mit feuerfestem Beton einbetoniert wird, treten Risse in der keramischen Schutzhülle aufgrund der unterschiedlichen Ausdehnung des Betons und der Keramik-Schutzhülle auf. Weiter sind die keramischen Schutzhüllen gegen Verbiegen äußerst instabil und lassen sich daher nur schwer unbeschädigt in die Öfen einführen und wieder entfernen.

Ein dritte Ansatz bei der Herstellung von Schutzhüllen besteht in der Verwendung von Pappe, die jedoch nur zum Einmalgebrauch geeignet ist.

Aus dem deutschen Gebrauchsmuster DE 7228088 ist bekannt, ein Thermoelement in einer Wand einer Stahlpfanne anzuordnen. Das Thermoelement ist in einem Stahlrohr angeordnet, welches von einer keramischen Schutzschicht umgeben ist.

DE-A 1054735 offenbart einen Schmelztiegel für Metalle, in dessen Wand ein Temperaturfühler eingesetzt ist. Der Temperaturfühler weist ein Schutzrohr aus einem metall-keramischen Werkstoff wie Molybdän/Aluminiumoxid auf.

US 3,610,045 offenbart einen Schmelztiegel für eine Eisenschmelze, in dessen Seitenwand ein Thermoelement angeordnet ist. Dieses ist durch eine konische Schutzhülle aus Aluminiumoxid und Siliziumoxid geschützt.

Ein ähnlicher Behälter ist aus EP-A 0 314 807 bekannt. Gemäß dieser Druckschrift ist das Thermoelement durch ein Alumniumoxidröhrchen geschützt, welches wiederum im Inneren des Behälters von einer Bornitrid-Schutzhülle umgeben ist.

EP-A 1 61 4 489 offenbart eine Schutzhülle für ein Thermoelement aus einem hitzebeständigen Metalloxid und Graphit.

Üblicherweise wurden bisher äußere Schutzhüllen aus Gusseisen für Thermoelemente in Aluminiumschmelzöfen verwendet. Die Lebenszeit solcher Vorrichtungen liegt ungefähr zwischen 3 und 8 Tagen. Derartige Gusseisenschutzhüllen weisen jedoch einige Nachteile auf, beispielsweise dahingehend, dass Gusseisen in geschmolzenem Aluminium löslich ist und daher das Aluminium verunreinigt wird, und das Gusseisen darüber hinaus bei der Betriebstemperatur der Aluminiumöfen sehr duktil ist, so dass plastische Deformationen der Schutzhülle während des Betriebs und möglicherweise Bruch des Thermoelements auftreten kann.

In neuerer Zeit wurden aus technischen Keramikwerkstoffen hergestellte Keramikschutzhüllen vorgeschlagen, Eines der leistungsfähigeren Materialien für diesen Zweck ist SiAION^{®}, welches ein technischer Keramikwerkstoff ist, der eine feste Lösung von Si₃N₄ und Al₂O₃ umfasst. Die Lebensdauer von Temperaturmesseinrichtungen, welche Schutzhüllen aus SiAION^{®} aufweisen, kann bis zu einem Jahr betragen, und die Wärmeleitfähigkeit ist ausreichend für derartige Anwendungen, die Brüchigkeit dieser Keramikwerkstoffe erschwert jedoch die Handhabung in gewerblicher Umgebung außerordentlich, Darüber hinaus sind solche technischen Keramiken sehr kostspielig.

Es gibt ebenfalls keramische Schutzhüllen aus Feuerbeton (castable refractories), die für derartige Anwendungen getestet wurden. Die mit derartigen Schutzhüllen erzielte Lebensdauer beträgt normalerweise maximal zwei Wochen. Ein Nachteil solcher Feuerbetone liegt in der Tatsache, dass es sich um heterogene Materialien handelt, die im allgemeinen ein sehr grobe Körnung aufweisen und daher nicht zu ausreichend dünnen Schutzhüllen verarbeitet werden können. Darüber hinaus führen die relativ hohe Porosität zu einer niedrigen Festigkeit und schlechten thermischen Leitfähigkeit. Daher sind die Materialien relativ brüchig,

Zur Lösung dieses Problems wurde bereits die Verstärkung der Feuerbetonschutzhüllen durch Einarbeitung von Stahlstrukturen bei ihrer Herstellung vorgeschlagen (WO 2004/104534). Nach diesem Vorgehen wird eine Schutzschicht aus Feuerbeton als innere oder äußere Schutzhülle auf ein Stahlrohr gegossen, Die Stahlverstärkung erhöht die Biegebeständigkeit und verhindert katastrophale Folgen für die Metallschmelze beim Auftreten von Sprüngen im Feuerbeton, Ein Problem besteht jedoch darin, den Feuerbeton ausreichend fest an der Stahlverstärkung zu verankern. Weiterhin führen die Unterschiede der thermischen Expansionskoeffizienten zwischen Stahl und Feuerbeton normalerweise zu erhöhtem Auftreten von Sprüngen im Feuerbeton,

WO 2004/104534 schlägt eine Schutzhülle für ein Temperaturmesselement vor, welches ein erstes und ein zweites Rohr aufweist, die ineinander geschoben sind, wobei eine Lücke zwischen den benachbarten Rohrwänden vorgesehen ist. Durch diese Lücke wird eine unabhängige thermische Deformation beider Rohre erzielt und damit die Stabilität der Schutzhülle erhöht. Die beiden Rohre können aus jedem metallischen oder nichtmetallischen temperaturbeständigen Material bestehen, z. B, Gusseisen, obwohl die Rohre bevorzugt aus SiAlON^{®}, Si₃N₄, AIN, Al₂O₃, MgAl₂O₃, SiC, ZrO₂, B₄C, BN, Mullit, oder Keramikwerkstoffen auf Phosphorpentoxid-Basis bestehen, Als bevorzugte Materialien werden weiter Feuerbetone angegeben, z, B. Magnesia, Dolomit, Magnesia-Chrom-Zirkon, Magnesia-Alumina, Aluminosilikat, Materialien auf Siliziumcarbid-Basis und weitere.

EP-A 1 365 219 offenbart eine Schutzhülle für Thermoelemente mit hervorragender Beständigkeit bei hoher Temperatur und in oxidierender oder korrosiver Atmosphäre, umfassend einen Körper mit einem geschlossenen Ende, der aus pyrolytischem Bornitrid aufgebaut ist und eine Schutzschicht aufweist, die aus mindestens einem Material gebildet wird, das aus pyrolytischem Kohlenstoff, kohlenstoffhaltigem pyrolytischem Bornitrid, Siliziumnitrid, Siliziumcarbid und Aluminiumnitrid ausgewählt wird. Die Schutzschicht wird bevorzugt durch chemische Dampfabscheidung aufgebracht. Auch diese Anordnung ist besonders für Hochtemperaturmessungen in korrosiver Atmosphäre, die beispielsweise Fluorgas enthält, geeignet.

DE-A 37 25 615 offenbart ein Tauchpyrometer zur Messung hoher Temperaturen, welches ein Gehäuse aus feuerfestem Metalloxid und Graphit aufweist, wobei der Graphit in ausreichend hoher Konzentration vorgesehen ist, um eine gute Wärmeleitung zwischen der äußeren Oberfläche des Gehäuses und den Innenwänden der innen vorgesehenen Ausnehmung zu gewährleisten. In einer bevorzugten Ausführungsform weist das Tauchpyrometer zusätzlich eine Umhüllung für das Temperaturmesselement auf, welche ein einseitig geschlossenes Metallrohr aufweist. Die offenbarte Anordnung ist besonders zum Messen der Temperaturen flüssiger Metalle geeignet. Alternativ kann auch ein mit Keramik oder Keramik-Metall-Gemisch (Cermet) beschichtetes Metallrohr als innere Umhüllung des Thermoelements verwendet werden. Als Metalle werden besonders Molybdän und Nickel-Chrom-Stahl wie rostfreier Stahl vorgeschlagen. Bevorzugt weist das Metallrohr eine Vielzahl von porösen einzelnen Schichten aus Keramik-Metall-Gemisch auf.

EP-A-1 614 489 offenbart einen Behälter für Metallschmelze mit einer in einer Öffnung einer Behälterwand angeordneten Temperaturmesseinrichtung, wobei diese eine in den Behälter ragende an ihrem im Behälter angeordneten Ende geschlossene Schutzhülle und ein in einer Öffnung der Schutzhülle angeordnetes Temperaturmesselement aufweist. Die Schutzhülle besteht aus einem hitzebeständigen Metalloxid und Graphit Bevorzugt wird Aluminiumoxid als Metalloxid verwendet.

EP-A 1 548 415 betrifft ein Einmal-Trägerrohr für Sensoren für Messungen in Metall-Kryolithschmelzen, insbesondere in Gusseisen-, Stahl- oder Kupferschmelzen, Das Trägerrohr besteht aus einer Mischung eines pflanzlichen Fasermaterials mit Stärke und/oder Protein, die gemeinsam gepresst oder extrudiert werden. Ein derartiges Trägerrohr besteht aus natürlichem Material und ist daher umweltfreundlich zu entsorgen. Es ist auch ausreichend lemperaturstabil, um bei Temperaturen von bis zu 1.700 °C zumindest während der Entnahme der Messwerte ausreichend standzuhalten, so dass eine Messung und Weiterleitung der Messsignale erfolgen kann.

EP-A-1 757 91 5 offenbart eine Vorrichtung zur Temperaturmessung in Metallschmelzen, insbesondere in Eisen- oder Stahlschmelzen, mit einem Thermoelement, das in einem Thermoelementrohr angeordnet ist, mit einem äußeren Schutzkörper, der im wesentlichen aus Graphit und Metalloxid gebildet ist, wobei das Thermoelement in dem Schutzkörper unter Bildung eines Zwischenraums beabstandet angeordnet ist und wobei in dem Zwischenraum ein isolierendes Material und ein sauerstoffreduzierendes Material angeordnet sind, Sowohl als Oxid als auch als sauerstoffreduzierendes Material wird bevorzugt Aluminiumoxid vorgeschlagen.

DE 10 2005 027560, DE 198 26 792, DE 10 2005 02756 und DE 196 23 425 offenbaren oxidkeramische Faserverbundwerkstoffe und deren Einsatz für Brennkammern, heißgasleitende Komponenten in Flugzeugtriebwerken und stationäre Gasturbinen.

DE 1 0 2004 053959 offenbart eine YSiO₄-Keramik als Schutzschicht gegen Wärme und/oder Korrosion, wobei diese Keramik als Alternative zu oxidischen Faserverbundwerkstoffen beschrieben wird.

EP 0 764 837 beschreibt ein Schutzrohr für ein Thermopaar. Es wird kein Faserverbundwerkstoff verwendet, sondern eine spezielle Si₃N₄/TiN-Keramik verwendet, es ist kein inneres Metallrohr vorgesehen und es liegt keine Keramikbeschichtung vor.

WO 89/111637 offenbart ein Schutzrohr für einen Termperaturfühler, der Faserverbundwerkstoffe aufweist, insbesondere Kaowool^{®}. Es handelt sich dabei nicht um gewickelte Fasern. Eine Keramikbeschichtung ist nicht offenbart. Die Spitze des Schutzrohrs kann aus Graphit oder Siliziumcarbid bestehen.

Alle vorstehend beschriebenen Schutzhüllen für Temperaturmesselemente weisen immer noch keine ausreichende Stabilität und einfache Handhabung auf. Weiter sind die Materialkosten häufig noch zu hoch.

Es bestand also weiterhin ein Bedarf an stabilen, preiswert herzustellenden Schutzhüllen für Temperaturmesselemente, Dementsprechend liegt die Aufgabe der vorliegenden Erfindung darin, verbesserte Schutzhüllen für Temperaturmesselemente bereitzustellen.

### Offenbarung der Erfindung

Die Aufgabe wird gelöst durch die Schutzhülle gemäß Anspruch 1.

Bevorzugte Ausführungsformen sind in den Unteransprüchen definiert. Weiter betrifft die Erfindung die Verwendung von oxidkeramischen Faserverbundwerkstoffen zur Herstellung von Schutzhüllen für Temperaturmesselemente,

### Figuren

Figuren 1 bis 3 zeigen Längsschnitte durch verschiedene Spitzen zur Verwendung in einer erfindungsgemäßen zweiteiligen Schutzhülle nach Anspruch 3.

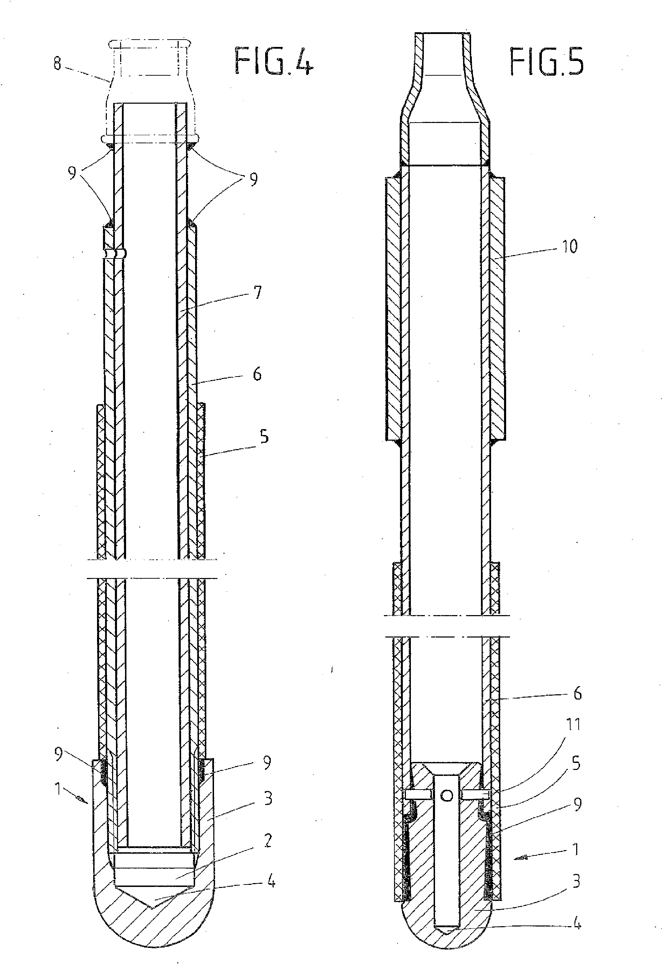

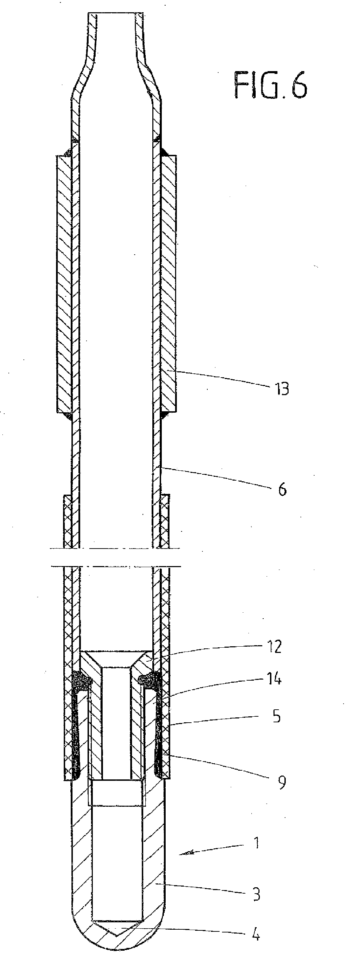

Figuren 4 bis 6 zeigen Schutzhüllen für Temperaturmesselemente gemäß der Erfindung.

Figur 7 zeigt einen Schnitt durch ein Metallschmelzbad, in dem das mit der erfindungsgemäßen Schutzhülle versehene Temperaturmesselement vorgesehen ist.

Figur 8 zeigt einen Längsschnitt durch eine bevorzugte Ausführungsform der erfindungsgemäßen Schutzhülle gemäß Anspruch 2 und 11.

### Detaillierte Beschreibung der_Erfindung

In neuerer Zeit wurden für Hochtemperatur-Langzeitanwendungen oxidkeramische Faserverbundwerkstoffe entwickelt (Konstruktion, Juli/August 7/8 2006, Seite 7). Solche oxidkeramischen Faserverbundwerkstoffe sind z, B. unter der Bezeichnung "Whipox^{®}" (Wound Highly Porous Oxide Ceramic Matrix Composites) bekannt. Sie sind für Anwendungen in Fluggasturbinen und Wiedereintrittsfahrzeugen sowie als Brennhilfsmittel und Hochgeschwindigkeitsbrennerdüsen im Industrieofenbau kurz vor der Markteinführung. "Whipox"-Verbundwerkstoffe werden in einem computergesteuerten Wickelprozess hergestellt, bei dem zunächst oxidkeramische Faserbündel auf der Basis von Aluminiumoxid und Mullit mit einer wässrigen keramischen Suspension, die hauptsächlich Aluminiumoxid oder ein Gemisch aus Aluminiumoxid und Siliziumoxid enthält, infiltriert werden. Anschließend werden die Faserbündel auf einem Wickelkern abgelegt, getrocknet und in einem Luftofen bei Temperaturen < 300 °C für rund 2 Stunden versintert. Damit können auf einfache Weise komplexe Wickelkörper industriell gefertigt werden. Alternativ kann nach dem Wickeln das noch feuchte Material vom Wickelkern entnommen, geformt und anschließend getrocknet und gesintert werden. Das Material kann, falls notwendig, mit zerspanenden Verarbeitungsverfahren nachbearbeitet werden. Aufgrund der geringen Materialkosten und des einfachen Herstellungsverfahrens ist das Material relativ kostengünstig, Es weist eine ausgezeichnete Thermoschockstabilität auf und ein nicht-sprödes, quasiduktiles Bruchverhalten. Besonders geeignet sind diese Materialien für Langzeitanwendungen in oxidierenden oder korrosiven Umgebungsbedingungen. Sie weisen bei der Verwendung für Brennerdüsen z. B. gegenüber SiC eine deutlich längere Standzeit sowie bessere Montagefreundlichkeit auf, da sie nicht spröde und daher leichter verarbeitbar sind. Die "Whipox^{®}"-Materialien wurden vom DLR Deutschen Zentrum für Luft- und Raumfahrt e, V. entwickelt und werden von der Firma Duotherm Isoliersysteme in Lizenz vertrieben. Die Whipox^{®}-Werkstoffe sind in DE-A 196 23 425, DE-A 598 02 296, De-A- 198 26 792, DE-A 10 2005 027 561 und DE-A 10 2005 027 560 detailliert beschrieben, deren Inhalt hier durch Bezugnahme vollinhaltlich einbezogen wird.

Whipox^{®} ist nur sehr schlecht wärmeleitfähig und zudem hochporös. Die Porosität kann in gewissem Ausmaß durch die Wahl der Faserdicke beeinflusst werden: je dicker die Faser, desto poröser das erhaltenen Material, Entsprechend wird das Material weniger porös, wenn die Fasern dünner gewählt werden, allerdings steigen dann die Kosten für das Wickelverfahren stark an, Zur Einstellung der Porosität von Whipox^{®} wurden bereits Beschichtungen vorgeschlagen, z.B. durch CVD (Chemische Dampfabscheidung) (s. http://www.whipox.de).

Auch sogenannte "Keramikbleche" sind bekannt; sie werden beispielsweise von der Firma Priskow hergestellt und von der Fa, Alphatec für den Aluminiumgießereibedorf unter der Bezeichnung "Varioflex" (http://keramikblech.com/html/aluminiumgießerei.html) vertrieben. Solche Keramikbleche bestehen aus Geweben und Fasern, welche aus anorganischen Oxiden aufgebaut sind. Die genaue Werkstoffbezeichnung lautet "Oxid-Keramik-Matrix-Komposite", Dieses Keramikblech ist dünnwandig, thermoschockbeständig, schadenstolerant, temperaturstabil, oxidationsbeständig und leicht. Es werden aus derartigem Keramikblech z, B. Brennerrohre bzw, Flammrohre, Brennerdüsen, Rohre und Schutzrohre sowie Platten und Profile hergestellt.

Allerdings wurden derartige oxidkeramische Faserverbundwerkstoffe wie Whipox^{®} oder Keramikblech bisher immer als ungeeignet für Schutzhüllen für Temperaturmesselemente angesehen, weil sie eine äußerst geringe Wärmeleitfähigkeit aufweisen, Zudem bestanden wegen der hohen Porosität Bedenken gegenüber der Anwendung in Metallschmelzen, weil erwartet wurde, dass das geschmolzene Metall durch die Poren dringen und im Inneren Schäden verursachen würde. So wurde erwartet, dass bei der Verwendung für Temperaturmesselement-Schutzrohre das eindringende geschmolzene Metall die Thermoelemente zerstören würde.

Es wurde nun überraschenderweise gefunden, dass derartige oxidkeramische Faserverbundmaterialien entgegen dieser Meinung doch für Schutzhüllen für Temperaturmesselemente geeignet sind und besondere Vorteile bieten.

Erfindungsgemäß weist die Schutzhülle für das Temperaturmesselement oxidkeramischen Faserverbundwerkstoff auf, Hierfür wird bevorzugt "Whipox^{®}" eingesetzt, aber auch andere oxidkeramische Faserverbundwerkstoffe können geeignet sein. Die Wahl dieses Materials bewirkt, dass die Hüllen extrem reißfest, stabil und hitzebeständig sind und dadurch eine sehr viel längere Lebensdauer aufweisen als die bekannten Schutzhüllen. Zudem sind sie kostengünstiger, leicht zu bearbeiten und zu handhaben, da das Material wegen seiner Faserstruktur nicht brüchig und sehr stabil gegen mechanische Beanspruchung ist.

Überraschenderweise lässt sich das Material trotz seiner Porosität als Schutzhülle für Temperaturmesselemente verwenden. Weiter hat sich überraschenderweise gezeigt, dass die Oberfläche des Materials kaum durch die Aluminiumschmelzekomponenten benetzt wird. Auch nach mehreren Wochen zeigen sich kaum Ablagerungen von Schmelzebestandteilen auf der Außenseite der erfindungsgemäßen Schutzhülle. Derartige Ablagerungen sind äußerst nachteilig, da sie dazu führen, dass die Schutzhülle beim Entnehmen aus dem Schmelzbad in der Badwand hängen bleibt und dabei zerbricht oder auseinanderreißt.

Die erfindungsgemäße Schutzhülle ist ein zylindrischer, röhrenförmiger Körper, der an einem (dem unteren) Ende geschlossen und am anderen (oberen) Ende offen ist. Durch das offene Ende wird das Temperaturmesselement (Thermoelement) in eine im Inneren der Schutzhülle vorgesehen Ausnehmung eingeführt, sodass das eine Ende des Thermoelements das geschlossene Ende der Schutzhülle von innen berührt, Das untere geschlossenen Ende besteht aus einem anderen, besser wärmeleitfähigen Material. Das Thermoelement kann auf diesem wärmeleitfähigen Material entweder anstoßen, oder es kann im Boden der Schutzhülle , der aus dem wärmeleitfähigen Material besteht, eine enge kurze Bohrung zur Aufnahme des Endes des Thermoelements vorgesehen sein, sodass dieses seine Position im Inneren der Schutzhülle stabil beibehält. Die Ausnehmung im Inneren der Schutzhülle ist im allgemeinen eine zylindrische Bohrung, die zum unteren Ende der Schutzhülle hin konisch zuläuft, so dass sich dort eine Spitze bildet, es ist aber auch jede andere Form von Ausnehmung geeignet. Die konische Form bietet den Vorteil, dass das Thermoelement dadurch in seiner Position gehalten wird.

Die Dimensionen der Schutzhülle sowie die Wanddicke werden insbesondere angepasst an den Schmelzofen ausgewählt, in dem sie eingesetzt werden sollen. Im allgemeinen haben erfindungsgemäße Schutzhüllen eine Wanddicke von ca, 2 bis 4 mm, eine Länge von bis zu 140 cm, und einen Außendurchmesser von ca. 30 bis 60 mm, bevorzugt ca. 40 bis 50 mm, besonders bevorzugt ca. 45 mm. Vor allem die Länge wird vorzugsweise geeignet an die Ofendimensionen angepasst, und beträgt daher regelmäßig ca. 1 m bis 2,50 m. Bevorzugt sind 1,40 m, damit die Schutzhülle bei Durchführung durch die Badwand, die mit feuerfestem Material verkleidet ist und daher eine beträchtliche Dicke aufweist, noch genügend tief in die Metallschmelze eintaucht, dabei aber nicht in die Nähe der Brennerflammen gerät, und andererseits die Kosten nicht unnötig hoch werden. Durch die genannte Wanddicke und die Dimensionen wird ein geeignetes Gleichgewicht zwischen Stabilität und Herstellungskosten erzielt,

Bevorzugt werden am Markt erhältliche Röhren aus dem oxidkeramischen Faserverbundwerkstatt, z.B. Whipox^{®,} auf die passende Länge gebracht. Die Faserstärke beträgt bevorzugt um die 6500 bis 30000 DEN, besonders bevorzugt 7500 bis 15000 DEN, weil damit ein optimales Preis/Festigkeitsverhältnis erreicht wird.

Das obere Ende der Schutzhülle bleibt üblicherweise offen, es können aber auch Gewinde eingeschnitten und übliche Thermokopfelemente eingeschraubt werden, oder die Thermokopfelemente eingeklemmt werden,

Bevorzugt wird auf das Äußere der Schutzhülle eine Beschichtung aus einer Keramikmasse aufgetragen, die als Schlicker oder Schlichte bezeichnet wird. Es handelt sich um eine Suspension aus Keramikpartikeln in Wasser. Z.B. ist das kommerzielle erhältliche Produkt Duomullit^{®} geeignet, das zu 72 Gew,-% aus Al₂O₃- und zu 28 Gew.-% aus SiO₂-Partikeln besteht. Die Partikel werden mit Wasser vermengt, bis eine Paste entsteht, die auf das Faserverbundrohr z,B, durch Aufstreichen aufgetragen wird. Die erhaltene Beschichtung lässt man nach dem Auftragen unter geeigneten Bedingungen trocknen, bevorzugt im Ofen bei ca. 130 °C während ca. 2 Stunden, so dass eine Schichtdicke von ca. 40 bis 80 µm erzielt wird. Es hat sich herausgestellt, dass durch eine solche Beschichtung Probleme, die aus einer (zu großen) Porosität des Materials resultieren können, zuverlässig vermieden werden, Es muss dann vor allem nicht darauf geachtet werden, dünne keramische Fasern auszuwählen, um so die Porosität zu minimieren, was aber andere Nachteile und zwar vor allem wirtschaftliche Nachteile zur Folge hat.

Am unteren Ende der Schutzhülle ist eine Spitze aus einem wärmeleitfähigen Material vorgesehen. Die Wärmeleitfähigkeit des ausgewählten Materials beträgt bevorzugt mindestens 20 W/mK bei 20 °C, um ein Thermoelement mit den gewünschten Eigenschaften zu erhalten.

Die wärmeleitfähige Spitze kann in Form eines flachen Deckels das untere Ende der Schutzhülle verschließen, Der Deckel kann mit Hilfe eines Gewindes aufgeschraubt oder auch mit einem geeigneten hitzbeständigen Keramikkleber angeklebt werden. Ein solcher Aufbau ist jedoch verhältnismäßig instabil, so dass sich der Deckel leicht löst, wenn die Schutzhülle aus dem Bad entnommen wird.

Die wärmeleitfähige Spitze der Schutzhülle kann daher bevorzugt beispielsweise halbkugelig abgerundet, konisch zulaufend oder zylindrisch geformt sein. Bevorzugt ist sie halbkugelig, da so die Stabilität am größten ist und die Spitze einfach hergestellt werden kann.

### Bevorzugt ist die Spitze der Schutzhülle wie folgt ausgestaltet:

Die Spitze besteht aus einem Werkstoff, der eine Wärmeleitfähigkeit von mindestens 20 W/mK bei 20 °C aufweist. Es wird z.B. ausgewählt aus Bornitrid (BN), Siliziumnitrid, Siliziumcarbid und Aluminiumnitrid. Besonders bevorzugt ist Bornitrid, das wiederum weiter bevorzugt mit Zirkoniumoxid oder Aluminiumnitrid (AIN) dotiert ist. Reines Bornitrid zeigt eine gute Wärmeleitfähigkeit, sehr gute Verarbeitbarkeit, sehr gute Temperaturbeständigkeit, sehr gute Thermoschockbeständigkeit, sehr gute Temperaturwechselbeständigkeit auch bei sehr hohen Temperaturen von über 1100°C, hohen elektrischen Widerstand und eine sehr geringe Benetzung durch übliche Metallschmelzen. Die mechanische Festigkeit ist aber häufig nicht ausreichend. Mit ZrO₂ dotiertes BN zeigt demgegenüber eine deutlich höhere mechanische Festigkeit. Allerdings ist die Temperaturwechselbeständigkeit nur bis 1 100°C sehr gut. Darüber nimmt sie deutlich ab, Für die Aluminiumschmelzen, deren Temperatur i.a. unter 800°C liegt, reicht die Temperaturwechselbeständigkeit jedenfalls aus. Bei Dotierung mit AIN erreicht das BN eine Wärmeleitfähigkeit von 30 bis 40 W/mK bei 20 °C. Das Material ist aber auch wesentlich teurer als mit ZrO₂ dotiertes BN, Mit SiO₂ dotiertes BN ist demgegenüber zwar deutlich preiswerter, dafür aber nur mäßig wärmeleitfähig. Die genannten dotierten BN-Materialien werden alle sehr wenig durch die Komponenten der Schmelze benetzt, so dass sich kaum Ablagerungen bilden, die wie vorstehend erwähnt äußerst nachteilig sind. Daher ist mit ZrO₂ dotiertes BN unter den Gesichtspunkten Kosten, Temperaturwechselbeständigkeit und Wärmeleitfähigkeit besonders geeignet. Das Material lässt sich gut durch geeignete Verfahren mechanisch bearbeiten und formen und kann daher leicht zu den gewünschten wärmeleitfähigen Spitzen verarbeitet werden.

Die Spitze ist üblicherweise ca, 8 bis 20 cm, bevorzugt ca. 10 cm lang. Sie kann am unteren Ende halbkugelig abgerundet, abgeflacht, zylindrisch oder auch konisch zulaufend sein, wobei das untere Ende jedenfalls geschlossen ist. Bevorzugt ist sie halbkugelig, da sie so die größte mechanische Stabilität aufweist. Sie weist im inneren eine Ausnehmung zur Aufnahme des Thermoelements auf, bevorzugt in Form einer zylindrischen Bohrung, die am unteren Ende konisch zuläuft, wie vorstehend genannt. Der Innendurchmesser der Ausnehmung beträgt i.a, ca, 25 bis 40 mm, bevorzugt ca. 28 bis 35 mm und noch bevorzugter 30 bis 32 mm, Der Außendurchmesser beträgt ca, 30 bis 60 mm, bevorzugt ca, 40 bis 50 mm und besonders bevorzugt ca, 45 mm, Die Wanddicke der Spitze beträgt üblicherweise ca, 3 bis 20 mm, bevorzugt 1 2 bis 15 mm, da hierdurch eine gute Balance zwischen mechanischer Festigkeit und Kosten erreicht wird. Die Länge kann beliebig gewählt werden und beträgt z.B. ca. 4 bis 20 cm, bevorzugt 5 bis 12 cm, besonders bevorzugt ca, 10 cm. Eine Länge von mindestens ca. 4 cm ist vorteilhaft , damit eine genügend große Kontaktfläche für die Schutzhülle vorliegt. Zu groß sollte die Länge aber aus Kostengründen und wegen der Brüchigkeit der Spitze nicht sein, so dass ca, 10 cm optimal sind.

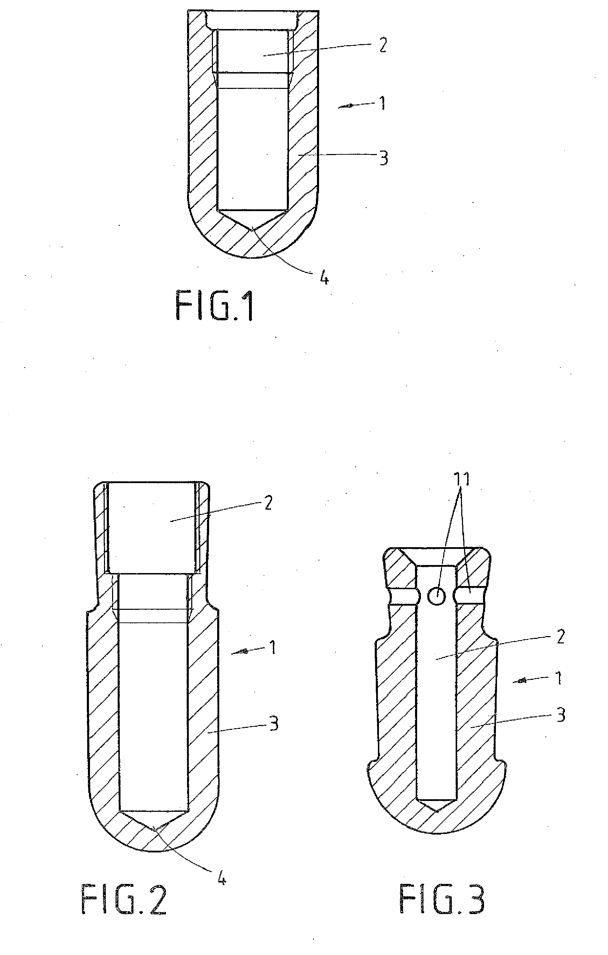

Das andere obere Ende der Spitze wird entweder in die Schutzhülle eingebracht, wobei Außendurchmesser der Spitze und Innendurchmesser der Schutzhülle jeweils aneinander angepasst sind. Eine derartige Ausführungsform der Spitze ist in Figur 2 dargestellt. Alternativ können Schutzhülle und Spitze auch so ausgestaltet sein, dass die Schutzhülle in die Spitze eingebracht wird (s. Figur 1 und 3) oder beide aneinander angesetzt und geeignet befestigt werden, z.B. durch Verkleben, z.B. mit einer keramischen Feuerfest-Reparaturmasse (Ofenkitt), Als keramische Befestigungsmasse ist jede übliche hitzebeständige Keramikreparaturmasse (Ofenkitt) geeignet, z.B. Pecora Zement. Die Teile können so ineinander eingebracht werden, dass ein reibschlüssiges Einstecken erfolgt, oder durch Vorsehen von Gewinden eingeschraubt werden, oder durch Anbringen von Bohrungen mit Stiften befestigt werden (Figur 3), so dass auch bei starker mechanischer Belastung die Spitze nicht vom Schaft getrennt wird. Die Art der Verbindung beider Teile wird in Abhängigkeit von den zu erwartenden mechanischen Belastungen geeignet ausgewählt, denen die Schutzhülle bei der Anwendung ausgesetzt wird. Gegebenenfalls werden die beiden Teile zusätzlich durch Ofenkitt verklebt und dadurch eine gegenüber der Metallschmelze dichte Verbindung geschaffen,

In der Spitze kann das Thermoelement entweder anstoßen, so dass es aufliegt, oder es kann eine kurze Bohrung vorgesehen sein zur Aufnahme des Endes des Thermoelements, oder dieses kann mit Hilfe einer keramischen Befestigungsmasse wie vorstehend genannt, z.B. Pecora Zement, eingeklebt werden. Durch die kurze Bohrung oder das Verkleben wird eine Fixierung des Thermoelements erreicht, so dass eine hohe Messzuverlässigkeit gewährleistet wird.

Die Spitze kann durch mechanisches Bearbeiten, z.B. Drehen, Bohren, Gewindeschneiden, ggf. Polieren eines käuflichen Stabs aus dem ausgewählten Material, z.B, dotiertes Bornitrid, hergestellt werden.

In einer weiteren bevorzugten Ausführungsform weist die erfindungsgemäße Schutzhülle zur mechanischen Verstärkung mindestens ein Metallrohr auf, das im Inneren des Schaftes und ggf, auch im Inneren der Spitze vorgesehen ist. Die mechanische Stabilität der Schutzhülle wird dadurch weiter verbessert. Zudem kann, wenn das Metallrohr am oberen Ende über die Schutzhülle übersteht, also länger ist als diese, die gesamte Vorrichtung in hydraulische Antriebsvorrichtungen zum Ein- und Ausfahren in den Ofen eingespannt werden, was bei der Schutzhülle aus oxidkeramischem Faserverbundwerkstoff wegen dessen geringerer mechanischer Stabilität nicht möglich ist.

Das metallische Innenrohr besteht aus hitzefeste stabilem Metall, bevorzugt aus hoch hitzefestem Stahl. Bevorzugt ist z. B. Nickel-Chrom-Nickel-Stahl 1.48.41 oder 1.48.28. Diese Materialien sind besonders hitzefest und dabei preiswert und leicht zu verarbeiten und werden daher bevorzugt eingesetzt.

Die Länge des metallischen Innenrohrs wird an die Schmelzofengegebenheiten und die Länge der Faserverbundschutzhülle angepasst. Sie ist bevorzugt größer als die Länge der Faserverbundschutzhülle und liegt z.B. bei ca. 2,30 m, Der Außendurchmesser wird ebenfalls an die Durchmesser der Spitze und der Schutzhülle angepasst. Bevorzugt wird der Außendurchmesser so gewählt, dass das metallische Rohr mit etwas Spiel in die Spitze und die Schutzhülle eingefügt werden kann, um den unterschiedlichen Wärmeausdehnungen der verschiedenen Materialien Rechnung zu tragen und mechanische Belastungen oder gar ein Lösen der Teile voneinander durch die unterschiedliche Ausdehnung zu vermeiden.

Es ist möglich, zwei derartige Metallrohre vorzusehen, bevorzugt ist aber die Verwendung nur eines Metallrohrs, da dies zur Stabilisierung ausreicht,

Es ist erfindungsgemäß auch möglich, eine weiteres Metallrohr vorzusehen derart, dass es in dem Bereich des Metallrohrs, der über die Schutzhülle aus oxidkeramischem Faserverbundmciterial übersteht, über das Metallrohr geschoben und ggf, mit diesem verschweißt wird. In diesem Bereich erfolgt dann das Einklemmen der Schutzhülle in die Ein- und Ausfuhrvorrichtung zum Einbringen in den Schmelzofen.

Am unteren und/oder oberen Ende des Innenrohrs könne Gewinde vorgesehen sein, um die Faserverbundwerkstoff-Schutzhülle oder die Spitze und/oder am oberen Ende Thermokopfelemente mit dem Innenrohr verschrauben zu können. Zu diesem Zweck können auch zusätzliche Metallgewinde in die Spitze eingebracht werden, die Gewinde aufweisen und mit dem Metallrohr verbunden werden, z.B. durch Verschweißen, so dass dann das verstärkende Metallrohr mit der Spitze verschraubt werden kann..

Das metallische Innenrohr und die Faserverbundwerkstoff-Schutzhülle und/oder die Spitze werden bevorzugt an den aneinander angrenzenden Rändern mit der vorstehend genannten Ofenkittmasse miteinander verklebt und abgedichtet, um Dichtigkeit gegenüber der Metallschmelze und eine festere Verbindung der Einzelteile zu ermöglichen.

Besonders bevorzugt ist eine Ausführungsform der erfindungsgemäßen Schutzhülle, bei der konzentrisch zwischen dem oxidkeramischem Faserverbundrohr und dem im Inneren vorgesehenem Metallrohr ein zweites Rohr aus oxidkeramischem Faserverbundwerkstoff vorgesehen ist, bevorzugt aus demselben Material wie das erste, äußere Faserverbundwerkstoffrohr. Dieses wird bevorzugt mit dem äußeren Faserverbundwerkstoff-Rohr verklebt, insbesondere unter Verwendung eines vorstehend beschriebenen Keramikklebers. Bevorzugt weist diese Ausführungsform darüber hinaus zur Fixierung des Metallrohrs einen Metallring auf, der außen am Metallrohr befestigt ist, z.B. angeschweißt oder angeklebt, Auf diesem Metallring liegt das innere Faserverbundwerkstoffrohr auf, so dass ein Verrutschen nach des Metallrohrs nach oben hin verhindert wird. Noch bevorzugter wird ein weiterer Metallring vorgesehen, der am oberen Ende des Stahlrohrs angebracht ist, z.B. geschweißt oder geklebt, der das Metallrohr am oberen Ende gegen Verrutschen nach untern sichert. Die Metallringe werden bevorzugt aus demselben Metall gefertigt wie das Metallrohr. Durch diese Konstruktion wird das Stahlrohr im Inneren der Hülle aus oxidkeramischem Faserverbundwerkstoff zuverlässig fixiert und ist daher beim Ein- und Ausfahren in bzw, der Metallschmelze stabil. In dieser Ausführungsform ist ein Verkleben des Metallrohrs mit der Spitze aus wörmeleitfühlgem Material nicht notwendig. Diese wird lediglich mit der Hülle aus oxidkeramischem Faserverbundwerkstoff verbunden, z.B. durch Keramikkleber oder Stifte wie oben beschrieben. Diese Ausführungsform hat den Vorteil, dass Wärmedehnungen in alle Richtungen aufgenommen werden können und keine Zerstörung der Konstruktion durch Spannungen auftritt.

Die erfindungsgemäße Schutzhülle kann insbesondere für Hochtemperaturmetallschmelzen, dabei bevorzugt Aluminiumschmelzen eingesetzt werden. Aber auch andere Metalle wie z. B. Nichteisenmetalle, Eisen, Kupfer, Edelmetalle wie Gold und Silber oder Platin, Kupfer sowie Glas- oder Salzschmelzen sind als Einsatzgebiete für die erfindungsgemäße Schutzhülle geeignet.

Die erfindungsgemäße Schutzhülle ist leicht herzustellen, da die verwendeten Materialien sich leicht mechanisch bearbeiten lassen. Sie ist sehr langlebig und kann bis zu mehreren Monaten ununterbrochen in Aluminiumschmelzen eingesetzt werden. Sie ist ferner stabil und nicht brüchig, so dass sie weniger anfällig gegen Bruch durch Fallenlassen, Anstoßen u.ä. beim Betrieb der Schmelzöfen ist. Weiter sind die verwendeten Materialien im Vergleich zu den üblichen Materialien sehr kostengünstig, so dass insgesamt bei Einsatz der erfindungsgemäßen Schutzhüllen deutliche Einsparungen im Vergleich zu den üblichen Schutzhüllen aus Gusseisen oder keramischen Werkstoffen erzielt werden können. Es ist sehr überraschend, dass trotz der unterschiedlichen Wärmeausdehnungskoeffizienten der verwendeten Materialien keine thermischen Spannungen bei der Verwendung in Metallschmelzen auftreten und die Gesamt-Schutzhülle sehr stabil und die Einzelteile stabil miteinander verbunden sind, so dass auch beim häufigen Ein- und Ausfahren in das Bad die Schutzhülle intakt bleibt. Durch die geringe Benetzung mit den Metallschmelzekomponenten bilden sich auch nach längerer Betriebszeit kaum Ablagerungen auf der Schutzhülle und/oder der Spitze, so dass ein wiederholtes Ein- und Ausfahren in die Metallschmelze ohne Zerstörung der Schutzhülle möglich ist, Auch wenn die Schutzhülle fest im Schmelzofen installiert wird, d.h. mit Keramikmasse in einer Öffnung in der Ofenwand eingegossen wird, ist die Schutzhülle wegen der hohen Elastizität des Faserverbundwerkstoffs über lange Zeit sehr stabil.

Die Erfindung wird weiter unter Bezug auf die Figuren beschrieben.

In den Figuren bezeichnet (1) die Spitze der erfindungsgemäßen Schutzhülle, (2) bezeichnet die Ausnehmung (Bohrung) im Inneren zur Aufnahme des Thermoelements, (3) bezeichnet die Wand der Spitze (1). (4) bezeichnet die konisch zulaufende Spitze der Ausnehmung (2), in der das Thermoelement (nicht dargestellt) aufliegt. (5) bezeichnet den Schaft aus oxidkeramischem Faserverbundmaterial und (6) das verstärkende Metallrohr. (7) bezeichnet ein weiteres verstärkendes Stahlrohr, (8).eine Reduzierung mit Innengewinde, um Thermoelemente einzuschrauben und (9) die Verklebungen mit Keramikreparaturmasse. (10) und (13) bezeichnen eine weiteres Metallrohr, das mit dem verstärkenden Metallrohr verschweißt ist. In diesem Bereich erfolgt das Einklemmen der Schutzhülle in die Ein- und Ausfuhrvörrichtung. (11) bezeichnet Bohrungen zur Aufnahme von Stiften, mit den der röhrenförmige Schaft (nicht abgebildet) mit der Spitze (1) verbunden werden kann. (12) bezeichnet ein metallisches Drehteil mit Außengewinde, das mit (6) verschweißt ist, und (14) einen Konus im metallischen Drehteil, um das Einbringen des Thermoelements zu erleichtern.

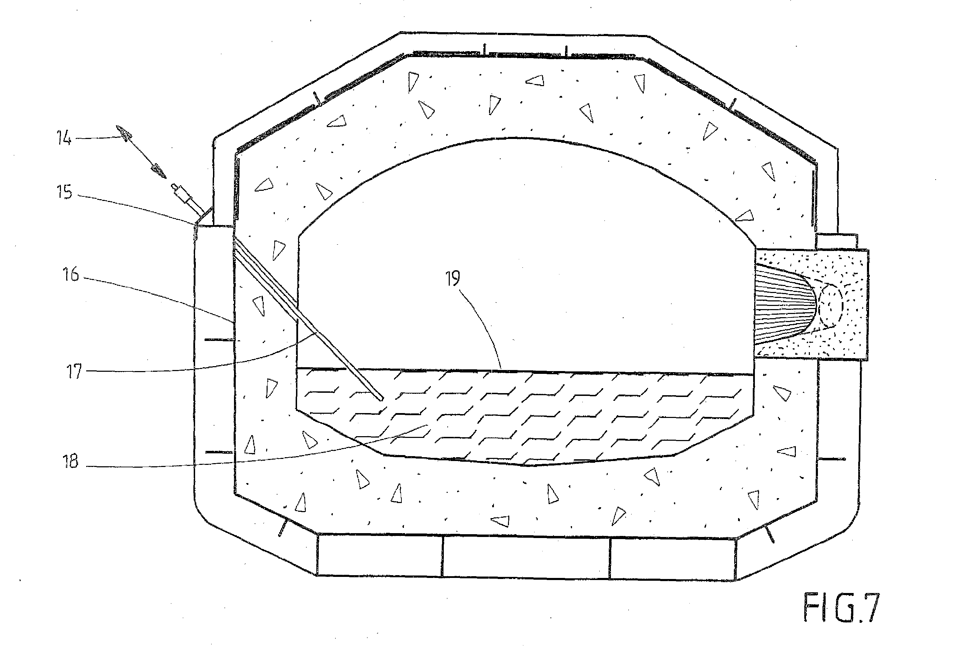

In Figur 7 bezeichnet (14) die Hubrichtung des Temperaturmesselements (incl, erfindungsgemäßer Schutzhülle), (15) eine Ein- und Ausfahrvorrichtung für das Temperaturmesselement, (16) die Schmelzofen-Wand, (17) die erfindungsgemäße Schutzhülle und (18) die Schmelzofenwanne und (19) den Badspiegel.

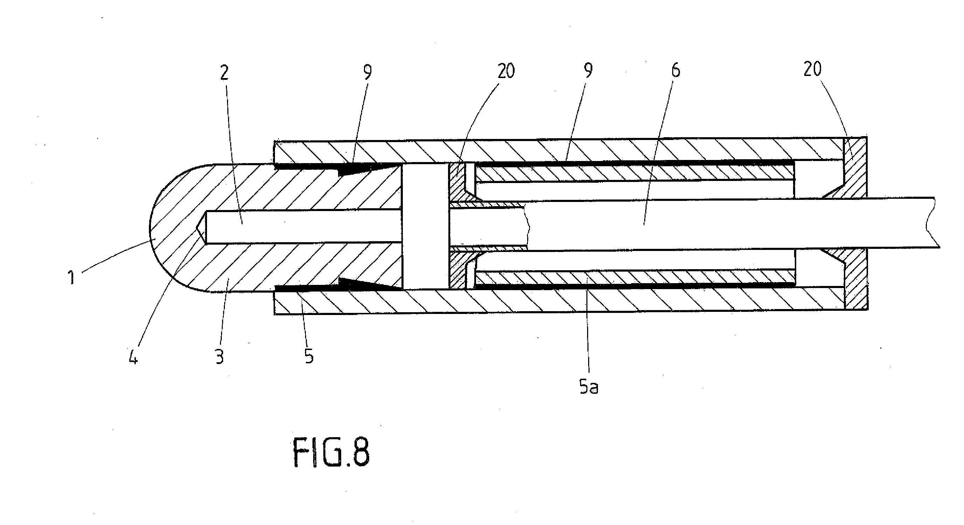

In Figur 8 haben (1) bis (6) und (9) die vorstehend angegebene Bedeutung. Weiterhin bezeichnet (5a) eine weiteres Rohr aus oxidkeramischem Faserverbundwerkstoff und (20) Metallringe zur Fixierung des verstärkenden Metallrohrs (6).

## Patentansprüche

1. Schutzhülle für ein Temperaturmesselement mit einem geschlossenen Ende und einem offenen Ende, durch das ein Temperaturmesselement in eine im Inneren der Schutzhülle vorgesehene Ausnehmung eingeführt werden kann, **dadurch gekennzeichnet, dass** die Schutzhülle oxidkeramischen Faserverbundwerkstoff aufweist.

2. Schutzhülle nach einem der vorhergehenden Ansprüche, wobei mindestens zwei konzentrisch angeordnete Schutzhüllen aus oxidkeramischem Faserverbundwerkstoff vorgesehen sind.

3. Schutzhülle nach Anspruch 1 oder 2, wobei der Faserverbundwerkstoff mit einer Keramikmasse beschichtet ist.

4. Schutzhülle nach Anspruch 1, 2 oder 3, welche zweiteilig aus einem oben offenen röhrenförmigen Schaft und einer geschlossenen Spitze aufgebaut ist, wobei Schaft und Spitze aus verschiedenen Materialien besteht, wobei das Material der Spitze insbesondere ausgewählt wird aus Bornitrid, Siliziumnitrid, Silziumcarbid und Aluminiumnitrid, und das Material des Schafts aus oxidkeramischem Faserverbundwerkstoff besteht.

5. Schutzhülle nach Anspruch 1, 2, 3 oder 4, welche zusätzlich ein in der Ausnehmung zur Aufnahme der Temperaturmesselements vorgesehenes nach beiden Seiten offenes Metallrohr aufweist.

6. Schutzhülle nach einem der vorhergehenden Ansprüche, bei der der oxidkeramische Faserverbundwerkstoff oxidkeramische Fasern auf der Basis von Aluminiumoxid und Mullit umfasst.

7. Schutzhülle nach einem der vorhergehenden Ansprüche, bei der der Verbundwerkstoff zusätzlich zu den Fasern Aluminiumoxid oder ein Gemisch aus Aluminiumoxid und Siliziumoxid umfasst.

8. Schutzhülle nach einem der vorhergehenden Ansprüche, bei der die Stärke der Fasern im Faserverbundwerkstoff 6000 bis 30000 DEN beträgt, und zwar bevorzugt 7500 bis 15000 DEN.

9. Schutzhülle nach einem der vorhergehenden Ansprüche mit einem rohrförmigen Schaft aus oxidkeramischem Faserverbundwerkstoff und einer damit verklebten Spitze, wobei der Klebstoff insbesondere eine Keramikreparaturmasse ist.

10. Schutzhülle nach einem der vorhergehenden Ansprüche mit einem rohrförmigen Schaft aus oxidkeramischem Faserverbundwerkstoff und einer damit verbundenen Spitze, wobei die Verbindung durch einen Stift erfolgt, der durch Bohrungen im Schaft und in der Spitze gesteckt ist.

11. Schutzhülle nach Anspruch 4 mit einem rohrförmigen Schaft aus oxidkeramischem Faserverbundwerkstoff und einer damit verbundenen Spitze sowie einem in der Ausnehmung vorgesehenen nach beiden Seiten offenen Metallrohr, die darüber hinaus ein weiteres konzentrisch zwischen Hülle und Metallrohr im Inneren des Schafts angeordnetes zweites rohrförmiges Element aus einem oxidkeramischen Faserverbundwerkstoff und zwei oberhalb bzw, unterhalb dieses zweiten Elements am Metallrohr befestigte Metallringe aufweist,

12. Thermoelement mit einer Schutzhülle nach einem der vorhergehenden Ansprüche.

13. Verwendung von oxidkeramischen Faserverbundwerkstoffen zur Herstellung von Schutzhüllen für Temperaturmesselemente.

14. Kombinierte Verwendung von oxidkeramischen Faserverbundwerkstoffen und Bornitrid zur Herstellung von Schutzhüllen für Temperaturmesselemente.
